# EUROPEAN PATENT APPLICATION

(11) **EP 4 597 728 A1**
(43) Date of publication of application: **06.08.2025**
(21) Application number: 22960408.7
(22) Date of filing: 30.09.2022
(51) Int. Cl.: H01M 50/50, H01M 50/543, H01M 50/503

(54) **BATTERY PACK AND ELECTRIC DEVICE**

(71) Applicant: Xiamen Ampack Technology Limited, Xiamen City, Fujian Province, 361000 (CN)
(72) Inventor: LING, Xianjin, Xiamen, Fujian 361000 (CN); WANG, Shenbo, Xiamen, Fujian 361000 (CN); YANG, Pengcheng, Xiamen, Fujian 361000 (CN)
(74) Representative: Icosa
(86) International application number: PCT/CN2022/123559
(87) International publication number: WO 2024/065796

(57) **Abstract**

This application provides a battery pack (100) and an electric device having the battery pack (100). The battery pack (100) includes a cell assembly (10) and a connecting member (20). The cell assembly (10) includes M cells (11) stacked along a first direction (X). Each cell (11) includes a cell housing (111), an electrode terminal (113), and an electrode assembly (112) disposed within the cell housing (111). The connecting member (20) includes N conductive sheets (23) spaced apart. The electrode terminal (113) is connected to the conductive sheet (23). Electrode terminals (113) of adjacent cells (11) are arranged in a non-overlapping manner in the first direction (X), reducing the risk of short circuits between adjacent electrode terminals (113). The electrode terminal (113) is connected to the electrode assembly (112) and extends out from the cell housing (111). Along the first direction (X), a projection of a portion, located outside the cell housing (111), of an electrode terminal (113) of any one of the cells (11) is separated from a projection of a portion, located outside the cell housing (111), of an electrode terminal (113) of an adjacent cell (11) in a second direction (Y). The second direction (Y) is perpendicular to the first direction (X), which is conducive to the connection of the electrode terminals (113) to other conductive members.

## Description

### TECHNICAL FIELD

This application relates to the field of energy storage technologies, and in particular, to a battery pack and an electric device.

### BACKGROUND

The cells of a battery pack are typically stacked, and electrode terminals of each cell overlap with each other along a stacking direction. This results in a small welding space and close proximity of the electrode terminals of the stacked cells, which is not conducive to the connection of the electrode terminals.

### SUMMARY

In view of this, it is necessary to provide a battery pack and an electric device that facilitate the connection of the electrode terminals.

Some embodiments of this application provide a battery pack including a cell assembly and a connecting member. The cell assembly includes M cells stacked along a first direction. Each cell includes a cell housing, an electrode terminal, and an electrode assembly disposed in the cell housing. The electrode terminal is connected to the electrode assembly and extends out from the cell housing. A projection of a portion, located outside the cell housing, of an electrode terminal of the each cells along the first direction is spaced apart from a projection of a portion, located outside the cell housing, of an electrode terminal of an adjacent cell along the first direction in a second direction. The second direction is perpendicular to the first direction. A connecting member includes N conductive sheets spaced apart from each other. The electrode terminal is connected to the conductive sheet. Electrode terminals of adjacent cells are arranged in a non-overlapping manner in the first direction, which is conducive to the connection of the electrode terminals to other conductive members and reducing the risk of short circuits between adjacent electrode terminals.

Optionally, in some embodiments of this application, the electrode terminal includes a first terminal and a second terminal with opposite polarities. The second terminal and the first terminal are arranged along the second direction. A second terminal of any one of the cells positioned between the first cell and the M-th cell and a first terminal of an adjacent cell positioned between the first cell and the M-th cell are connected to one conductive sheet to implement a series connection.

Optionally, in some embodiments of this application, a portion of the electrode terminal located outside the cell housing includes a connecting portion, N=1+M, and M≥3.

Optionally, in some embodiments of this application, the connecting member includes a first insulating member and a second insulating member. A plurality of conductive sheets spaced apart from each other are located between the first insulating member and the second insulating member. A portion of the conductive sheet is exposed through the first insulating member and/or the second insulating member.

Optionally, in some embodiments of this application, the conductive sheet includes a first section. The first section includes a first surface and a second surface arranged along a third direction. The second surface facing the cell housing. The electrode terminal is connected to the first surface and/or the second surface, providing a plurality of connection methods between the electrode terminal and the conductive sheet; and the third direction is perpendicular to both the first direction and the second direction.

Optionally, in some embodiments of this application, the first insulating member and the second insulating member are arranged along the third direction. The first insulating member and/or the second insulating member is provided with an opening. Along the third direction, a projection of the first section overlaps with a projection of the opening. The electrode terminal is connected to the first section.

Optionally, in some embodiments of this application, the first insulating member is provided with a first opening. The second insulating member is provided with a second opening. Along the first direction, a first gap is provided between an edge of the first section and an edge of the first opening. The electrode terminal extends out from the first gap through the second opening and is connected to the first surface, which is conducive to checking the welding quality.

Optionally, in some embodiments of this application, along the third direction, a projection of the first gap overlaps with a projection of the second opening.

Optionally, in some embodiments of this application, the second insulating member is provided with the second opening. Along the third direction, a projection of the second opening overlaps with the projection of the first section. The electrode terminal is connected to the second surface, which is conducive to enhancing automation efficiency.

Optionally, in some embodiments of this application, the first insulating member is provided with the first opening. The second insulating member is provided with the second opening. Some electrode terminals pass through the second opening and are connected to the first surface. Along the third direction, the projection of the second opening overlaps with the projection of the first section. Other electrode terminals are connected to the second surface, which is conducive to checking the welding quality.

Optionally, in some embodiments of this application, the conductive sheet further includes a second section. The second section extends out from the first insulating member and the second insulating member. A plurality of second sections are spaced apart, which is conducive to the welding of the second sections to other conductive members, and reducing damage to the cell during a welding process.

Optionally, in some embodiments of this application, the conductive sheet further includes a third section. The third section is disposed between the first insulating member and the second insulating member. The third section is connected to the first section and the second section.

Optionally, in some embodiments of this application, the third section includes a third subsection. The third subsection is bent along the second direction towards the second insulating member. The second section is connected to the third subsection, further increasing a distance between adjacent second sections, and further reducing the risk of short circuits caused by contact between the adjacent second sections.

Optionally, in some embodiments of this application, an edge of the electrode terminal is apart from the edge of the first opening, which is conducive to welding, and reducing interference between the connecting portion and the first insulating member.

Optionally, in some embodiments of this application, the cell housing includes a first portion and a second portion. The electrode terminal extends out from the second portion. The second portion is connected to the first portion to form a first recess. Along the first direction, a thickness of the first portion is less than 6 mm.

Optionally, in some embodiments of this application, along the first direction, the thickness of the first portion is 2 mm-4 mm.

Optionally, in some embodiments of this application, the battery pack further includes a circuit board, and the second section is connected to the circuit board.

Optionally, in some embodiments of this application, the electrode terminals of adjacent cells are located at different positions of the cell housing. Along the second direction, a width of the first terminal is W₁, a width of the second terminal is W₂, a distance between opposite edges of the first terminal and the second terminal of one cell along the second direction is W₃, and a distance between opposite edges of the first terminal and the second terminal of another adjacent cell along the second direction is W₄, satisfying W₁+W₂+W₄<W₃.

Optionally, in some embodiments of this application, the electrode terminals of the cells are all disposed at a same position of the cell housing. The cell housing includes a first side and a second side arranged along the second direction. Along the second direction, a distance between the first side and the second side is W, a distance between an edge of the first terminal close to the first side and the first side is F₁, and a distance between an edge of the second terminal close to the second side and the second side is F₂. A width of the first terminal is W₁, and a width of the second terminal is W₂, satisfying F₁+W₁<F₂ and 2*(F₂+W₂)<W.

Optionally, in some embodiments of this application, along the second direction, a distance between the second terminals of adjacent cells is d, satisfying d=[W-F₁-F₁-2*(W₁+W₂)]/3. This allows the first terminal and the second terminal of adjacent cells to maintain an approximately equal distance in the second direction, thereby reducing the occurrence of short circuits and reducing the risk of short circuits under a condition that the thicknesses of the cells are relatively small.

An embodiment of this application further provides an electric device, including the battery pack according to any one of the foregoing embodiments.

### BRIEF DESCRIPTION OF DRAWINGS

FIG. 1 is a schematic structural diagram of a cell assembly and connecting member according to some embodiments.
FIG. 2 is a schematic exploded view of a cell assembly and connecting member according to some embodiments.
FIG. 3 is a schematic structural diagram of a cell according to some embodiments.
FIG. 4 is a schematic exploded view of a cell according to some embodiments.
FIG. 5 is a schematic structural diagram of a first group of cells according to some embodiments.
FIG. 6 is a schematic exploded view of a cell according to some other embodiments.
FIG. 7 is a schematic structural diagram of an electrode assembly according to some embodiments.

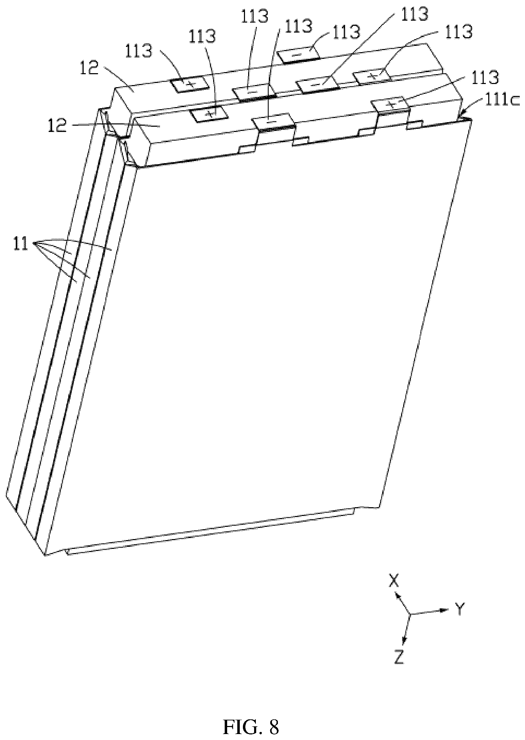

FIG. 8 is a schematic structural diagram of a cell assembly and insulating member according to some embodiments.
FIG. 9 is a schematic structural diagram of a first group of cells and a second group of cells according to some embodiments.

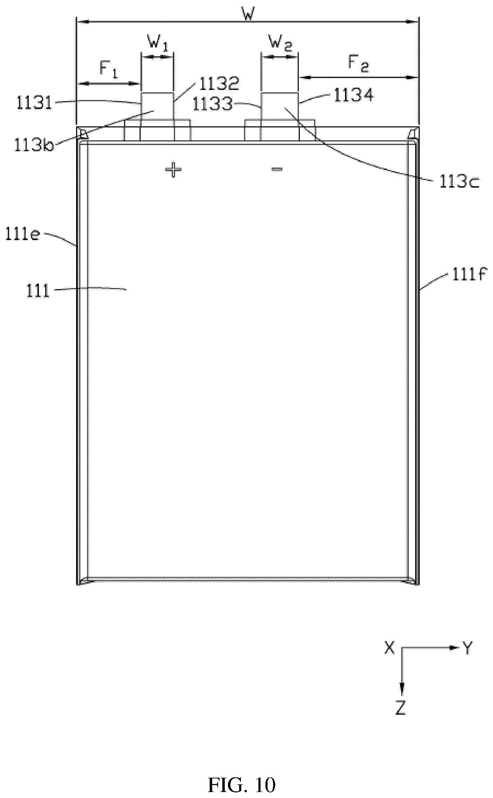

FIG. 10 is a schematic structural front view of a cell according to some embodiments.
FIG. 11 is a schematic structural diagram of stacked cells in FIG. 10.
FIG. 12 is a schematic structural front view of a cell according to some other embodiments.
FIG. 13 is a schematic structural front view of a cell according to still some other embodiments.
FIG. 14 is a schematic structural diagram of stacked cells in FIG. 12 and FIG. 13.
FIG. 15 is a schematic structural front view of stacked cells in FIG. 14.
FIG. 16 is a schematic exploded view of a connecting member according to some embodiments.
FIG. 17 is a schematic structural diagram of an electrode terminal connected to a connecting member according to some embodiments.
FIG. 18 is a schematic structural diagram of an electrode terminal connected to a connecting member according to still some other embodiments.
FIG. 19 is a schematic structural diagram of a circuit board, bracket, cell assembly, and connecting member according to some embodiments.
FIG. 20 is a schematic exploded view of a structure in FIG. 19.
FIG. 21 is a schematic exploded view of a battery pack according to some embodiments.
FIG. 22 is a schematic structural diagram of an electric device according to some embodiments.

Reference signs of main components:

| | |
|---|---|
| Battery pack | 100 |
| Cell assembly | 10 |
| Cell | 11, 11a1, 11a2, 11b1, 11b2 |
| First group of cells | 11a |
| Second group of cells | 11b |
| Cell housing | 111 |
| First portion | 111a |
| Second portion | 111b |
| First recess | 111c |
| Second recess | 111d |
| First side | 111e |
| Second side | 111f |
| First casing | 1111 |
| Second casing | 1112 |
| First extension portion | 1113 |
| Second extension portion | 1114 |
| First sealing portion | 1115 |
| Second sealing portion | 1116 |
| Electrode assembly | 112 |
| First electrode sheet | 112a |
| Second electrode sheet | 112b |
| Separator | 112c |
| Electrode terminal | 113 |
| Connecting portion | 113a |
| First terminal | 113b |
| First edge | 1131 |
| Second edge | 1132 |
| Second terminal | 113c |
| Third side | 1133 |
| Fourth side | 1134 |
| Insulating member | 12 |
| Connecting member | 20 |
| Through hole | 201 |
| First opening | 20a |
| Second opening | 20b |
| First insulating member | 21 |
| First gap | 21a |
| Second insulating member | 22 |
| Conductive sheet | 23 |
| First section | 231 |
| First surface | 231a |
| First extension region | 2312 |
| Second surface | 231b |
| Second section | 232 |
| Third section | 233 |
| Third subsection | 233a |
| Circuit board | 30 |
| Second through hole | 31 |
| Bracket | 40 |
| First space | 40a |
| First through hole | 41 |
| Buffer member | 50 |
| Housing | 60 |
| First casing | 61 |
| Second casing | 62 |
| Electric device | 200 |
| First direction | X |
| Second direction | Y |
| Third direction | Z |

This application is further described with reference to the accompanying drawings in the following specific embodiments.

### DETAILED DESCRIPTION OF EMBODIMENTS

The following describes the technical solutions in some embodiments of this application with reference to the accompanying drawings in some embodiments of this application. Apparently, the described embodiments are only some rather than all embodiments of this application.

When one component is assumed as being "disposed on/in" another component, the component may be provided directly on/in the another component or with a component possibly present therebetween. When one component is assumed as being "connected to" another component, it may be connected to the another component directly or with a component possibly present therebetween.

It should be understood that the terms "perpendicular" and "equal to" are used for describing an ideal state of two components. During actual production or use, the state between two components may be approximately perpendicular or equal, generally within a range of ±10%. For example, with reference to the description of numerical values, "perpendicular" may indicate that an included angle between two straight lines is within a range of 90°±10°, "perpendicular" may alternatively indicate that a dihedral angle of two planes is within a range of 90°±10°, and "perpendicular" may further alternatively indicate that an included angle between a straight line and a plane is within a range of 90°±10°. Two components described as "perpendicular" to each other may not be absolutely straight lines or planes, and may be approximately straight lines or planes. From a macro perspective, a component can be considered as a "straight line" or "plane" as long as the overall extension direction is a straight line or a plane.

The term "parallel" is used for describing an ideal state of two components. During actual production or use, an approximately parallel state may be present between the two components. For example, with reference to the description of numerical values, "parallel" may indicate that an included angle between two straight lines is within a range of 180°±10°, "parallel" may alternatively indicate that a dihedral angle of two planes is within a range of 180°±10°, and "parallel" may further alternatively indicate that an included angle between a straight line and a plane is within a range of 180°±10°. Two components described as "parallel" to each other may not be absolutely straight lines or planes, and may be approximately straight lines or planes. From a macro perspective, a component can be considered as a "straight line" or "plane" as long as the overall extension direction is a straight line or a plane.

Unless otherwise defined, the term "a plurality of" in the specification specifically indicates that there are two or more components when used for describing the number of components.

Unless otherwise defined, all technical and scientific terms used herein shall have the same meanings as commonly understood by persons skilled in the art to which this application belongs. The terms used herein in the specification of this application are intended to merely describe the specific embodiments rather than to limit this application. The term "and/or" used herein includes any and all combinations of one or more related listed items.

Some embodiments of this application provide a battery pack including a cell assembly and a connecting member. The cell assembly includes M cells stacked along a first direction. Each cell includes a cell housing, an electrode terminal, and an electrode assembly disposed within the cell housing. The electrode terminal is connected to the electrode assembly and extends out from the cell housing. A projection of a portion, located outside the cell housing, of an electrode terminal of the each cells along the first direction is spaced apart from a projection of a portion, located outside the cell housing, of an electrode terminal of an adjacent cell along the first direction in a second direction. The second direction is perpendicular to the first direction. A connecting member includes N conductive sheets spaced apart from each other. The electrode terminal is connected to the conductive sheet. Electrode terminals of adjacent cells are arranged in a non-overlapping manner in the first direction, which is conducive to the connection of the electrode terminals to other conductive members and reducing the risk of short circuits between adjacent electrode terminals.

The following describes in detail some embodiments of this application with reference to the accompanying drawings. In absence of conflicts, the following some embodiments and features in some embodiments may be combined with each other.

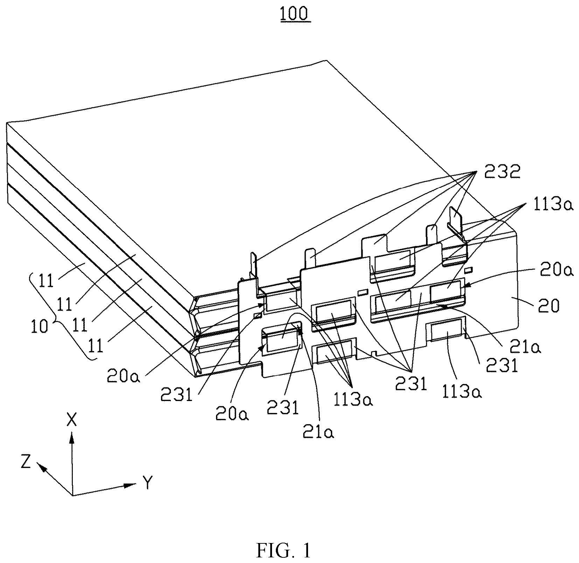

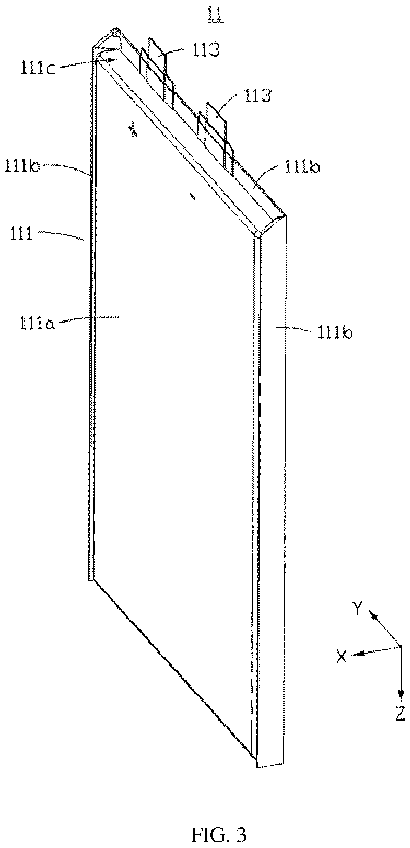

Referring to FIGs. 1, 2, 3, and 4, an embodiment of this application provides a battery pack 100 including a cell assembly 10 and a connecting member 20, where the cell assembly 10 includes M cells 11 stacked along a first direction X; and each cell 11 includes a cell housing 111, an electrode terminal 113, and an electrode assembly 112 disposed within the cell housing 111. The electrode terminal 113 is connected to the electrode assembly 112 and extends out from the cell housing 111. The electrode terminal 113 includes a first terminal 113b and a second terminal 113c; and the first terminal 113b and the second terminal 113c are arranged along a second direction Y. The first terminal 113b and the second terminal 113c have opposite polarities, with one of the first terminal 113b and the second terminal 113c being a positive electrode terminal and the other being a negative electrode terminal. In this specification, the first terminal 113b is described as a positive electrode terminal and the second terminal 113c is described as a negative electrode terminal for illustrative purposes. Along the first direction X, a projection of a portion, located outside the cell housing 111, of an electrode terminal 113 of any one of the cells 11 is separated from a projection of a portion, located outside the cell housing 111, of an electrode terminal 113 of an adjacent cell 11 in the second direction Y; and each electrode terminal 113 is connected to the connecting member 20. Electrode terminals 113 of adjacent cells 11 are arranged in a non-overlapping manner along the first direction X. This reduces the risk of short circuits between adjacent electrode terminals 113, and is conducive to the connection of the electrode terminals 113 to the connecting member 20. In addition, this allows for reduced separation members or no separation members, such as foam, between the cell housings 111 to increase a distance between the adjacent electrode terminals 113, and is conducive to producing a thin battery pack 100 and enhancing the energy density of the battery pack 100.

In an embodiment, the cell housing 111 includes a first portion 111a and a second portion 111b, where the first portion 111a accommodates the electrode assembly 112; the second portion 111b is connected to the first portion 111a to form a first recess 111c; and the electrode terminal 113 extends out from the second portion 111b. Optionally, the cell housing 111 includes an aluminum-plastic film. Optionally, the cell 11 includes a pouch cell.

In an embodiment, along the first direction X, a thickness of the first portion 111a is less than 6 mm, which is conducive to reducing the volume of the cell 11. Optionally, along the first direction X, the thickness of the first portion 111a is 2 mm-4 mm. The first portion 111a may have a thickness selected from any one of 2.0 mm, 2.1 mm, 2.2 mm, 2.3 mm, 2.4 mm, 2.5 mm, 2.6 mm, 2.7 mm, 2.8 mm, 2.9 mm, 3 mm, 3.1 mm, 3.2 mm, 3.3 mm, 3.4 mm, 3.5 mm, 3.6 mm, 3.7 mm, 3.8 mm, 3.9 mm, and 4.0 mm.

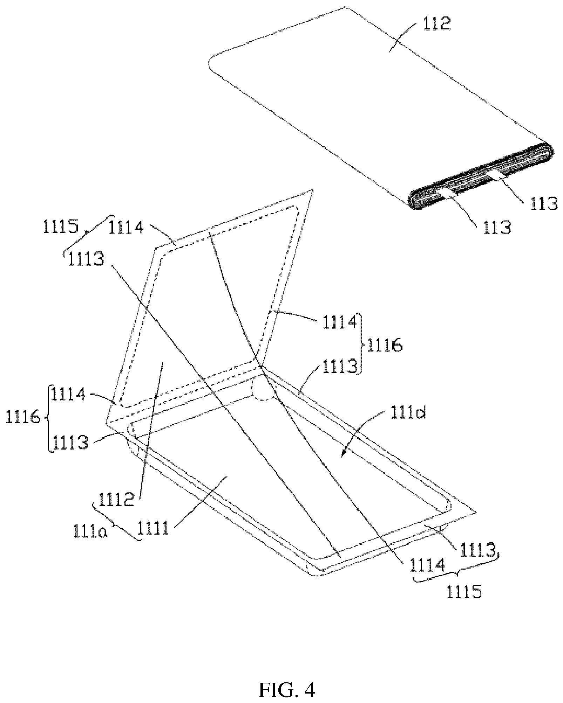

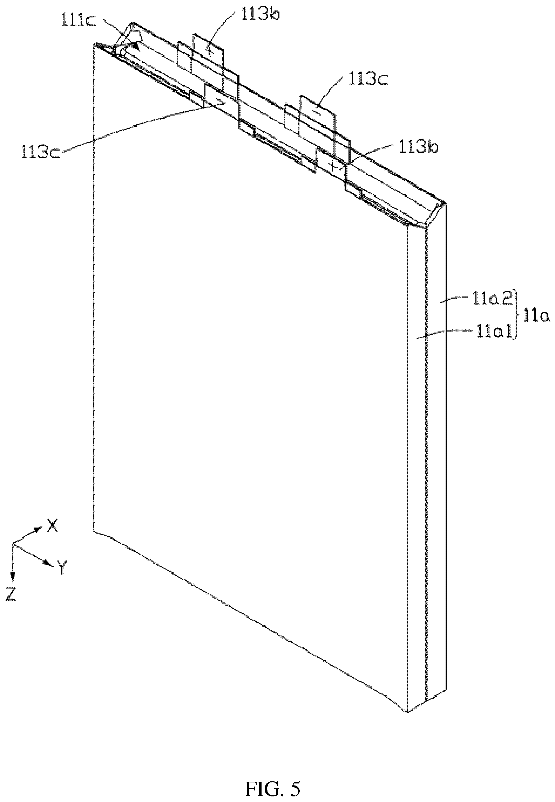

Referring to FIGs. 4, 5, and 6, in an embodiment, the cell housing 111 includes a first casing 1111 and a second casing 1112; and the first casing 1111 is connected to the second casing 1112. One of the first casing 1111 and the second casing 1112 is provided with a second recess 111d for accommodating the electrode assembly 112, and the other is a planar structure. The first casing 1111 and the second casing 1112 can be folded along a connection position (dotted line position) to overlap the first casing 1111 and the second casing 1112, forming the first portion 111a to enclose the electrode assembly 112. A peripheral side of the first casing 1111 extends outward to form a plurality of first extension portions 1113, and a peripheral side of the second casing 1112 extends outward to form a plurality of second extension portions 1114. After the first casing 1111 and the second casing 1112 are folded along the connection position, the first extension portion 1113 and the second extension portion 1114 overlap with each other and are sealingly connected to form the second portion 111b. Optionally, the first extension portion 1113 and the second extension portion 1114 are sealingly connected to each other through a sealing adhesive. The second portion 111b includes a first sealing portion 1115 and a second sealing portion 1116; the first sealing portion 1115 is disposed opposite the connection position; and the electrode terminal 113 extends out of the first portion 111a from the first sealing portion 1115. Optionally, the second portion 111b includes two second sealing portions 1116; and the two second sealing portions 1116 are arranged along the second direction Y. The second direction Y is perpendicular to the first direction X. Optionally, the second portion 111b includes one first sealing portion 1115; the cell 11 includes two electrode terminals 113; and the two electrode terminals 113 extend out of the cell housing 111 from the first sealing portion 1115. In another embodiment, the first casing 1111 is separated from the second casing 1112; the second portion 111b includes two first sealing portions 1115; the two first sealing portions 1115 are arranged along a third direction Z; and the cell 11 includes two electrode terminals 113, where one electrode terminal 113 extends out of the cell housing 111 from one first sealing portions 1115, and the other electrode terminal 113 extends out of the cell housing 111 from the other first sealing portion 1115; and the two electrode terminals 113 are arranged along the third direction Z. The third direction Z is perpendicular to both the first direction X and the second direction Y.

When one of the first casing 1111 and the second casing 1112 is provided with the second recess 111d, a space of the first recess 111c can be increased. When the cells 11 are stacked, first recesses 111c of adjacent cells 11 are in communication with each other, further increasing the space, and increasing a distance between the electrode terminals 113 of the adjacent cells 11 along the first direction X, thereby reducing the risk of short circuits. In an embodiment, an insulating member 12 is disposed within the first recess 111c. The insulating member 12 is disposed between the first portion 111a and the connecting member 20, which can further reduce the risk of short circuits between the cell 11 and the connecting member 20. Optionally, the insulating member 12 includes foam.

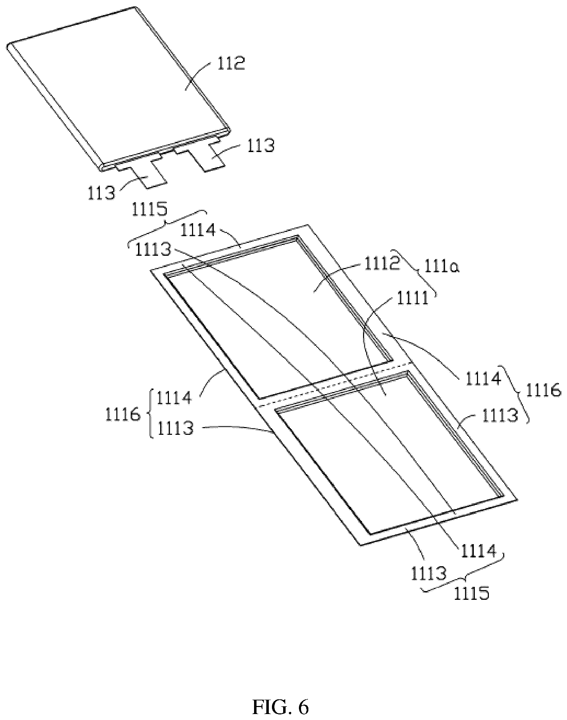

Referring to FIG. 6, in another embodiment, the cell housing 111 includes the first casing 1111 and the second casing 1112; and the first casing 1111 is connected to the second casing 1112. The first casing 1111 and the second casing 1112 are each provided with the second recess 111d, where a portion of the electrode assembly 112 is disposed within the second recess 111d of the first casing 1111, and another portion of the electrode assembly 112 is disposed within the second recess 111d of the second casing 1112. Along the first direction X, both sides of the second portion 111b are each provided with the first recesses 111c.

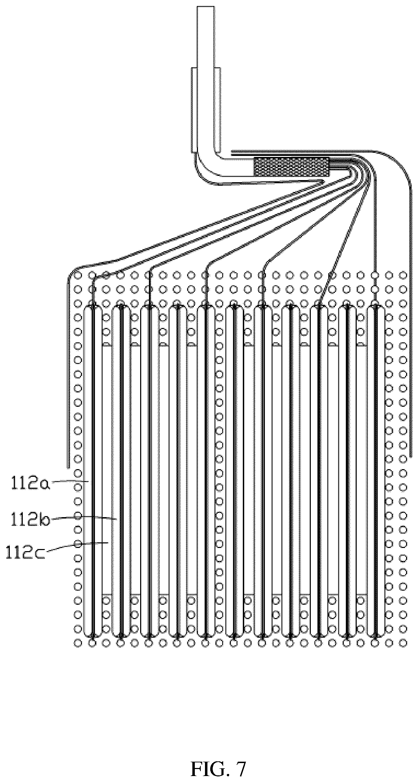

Referring to FIG. 7, in an embodiment, the electrode assembly 112 includes a wound structure formed by stacking and then winding a first electrode sheet 112a, a second electrode sheet 112b, and a separator 112c. In some other embodiments, the electrode assembly 112 may alternatively be of a laminated structure, where the first electrode sheet 112a, the separator 112c, and the second electrode sheet 112b are sequentially stacked, and the first electrode sheet 112a and the second electrode sheet 112b have opposite polarities.

In an embodiment, a portion of the electrode terminal 113 located outside the cell housing 111 includes a connecting portion 113a, where the connecting portion 113a is welded to another conductive structural member. The connecting portion 113a is formed by bending the electrode terminal 113, and the connecting portion 113a is connected to the connecting member 20. The first terminal 113b and the second terminal 113c are each provided with the connecting portion 113a. In another embodiment, the connecting portion 113a may alternatively be a flat plate-like structure.

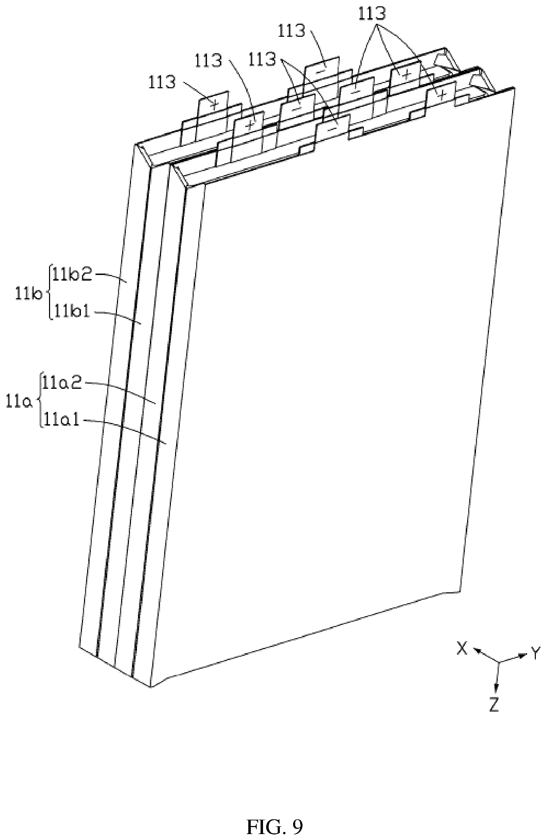

Referring to FIGs. 5, 9, and 11, FIGs. 5, 9, and 11 are schematic structural diagrams of unbent electrode terminals 113. The cell assembly 10 includes a first group of cells 11a and a second group of cells 11b, and the first group of cells 11a and the second group of cells 11b are arranged adjacently. The first group of cells 11a includes two cells 11a1 and 11a2, and the second group of cells 11b includes two cells 11b1 and 11b2. Along the first direction X, the cell 11a1, the cell 11a2, the cell 11b1, and the cell 11b2 are arranged sequentially. Along the first direction X, projections of portions, located outside the cell housing 111, of the electrode terminals 113 of the adjacent cells 11 are separated in the second direction Y.

In an embodiment, along the first direction X, a projection, located outside the cell housing 111, of a portion of the first terminal 113b of the cell 11a2, a projection, located outside the cell housing 111, of a portion of the second terminal 113c of the cell 11a1, a projection of a portion, located outside of the cell housing 111, of the second terminal 113c of the cell 11a2, and a projection of a portion, located outside the cell housing 111, of the first terminal 113b of the cell 11a1 are sequentially separated in the second direction Y. Along the first direction X, projections of portions, located outside the cell housing 111, of the two second terminals 113c are positioned between projections of portions, located outside the cell housing 111, of the two first terminals 113b, which is conducive to the connection of the cells 11.

In an embodiment, along the first direction X, a projection of a portion, located outside the cell housing 111, of the first terminal 113b of the cell 11b2, a projection of a portion, located outside the cell housing 111, of the second terminal 113c of the cell 11b1, a projection of a portion, located outside of the cell housing 111, of the second terminal 113c of the cell 11b2, and a projection of a portion, located outside the cell housing 111, of the first terminal 113b of the cell 11b1 are sequentially separated in the second direction Y. Along the first direction X, the projections of the portions, located outside the cell housing 111, of the two second terminals 113c are positioned between the projections of the portions, located outside the cell housing 111, of the two first terminals 113b, which is conducive to the connection of the cells 11.

In an embodiment, along the first direction X, a projection of a portion, located outside the cell housing 111, of the first terminal 113b of the cell 11a2, a projection of a portion, located outside the cell housing 111, of the second terminal 113c of the cell 11b1, a projection of a portion, located outside the cell housing 111, of the second terminal 113c of the cell 11a2, and a projection of a portion, located outside the cell housing 111, of the first terminal 113b of the cell 11b1 are sequentially separated in the second direction Y. Along the first direction X, the projections of the portions, located outside the cell housing 111, of the two second terminals 113c are positioned between the projections of the portions, located outside the cell housing 111, of the two first terminals 113b, which is conducive to the connection of the cells 11.

In this application, the electrode terminals 113 of the adjacent cells 11 are arranged in a non-overlapping manner in the first direction X. This allows the electrode terminals 113 close to each other to be staggered, and reduces the risk of short circuits between the adjacent electrode terminals 113. In addition, this allows for reduced separation members or no separation members between the bonded first portions 111a to increase the distance between the adjacent electrode terminals 113, and is conducive to producing a thin battery pack 100 and enhancing the energy density of the battery pack 100. Moreover, this also allows for an arrangement of the cells 11 each having a structure with only one second recess 111d provided in the first portion 111a, which is conducive to the production.

In an embodiment, the first recess 111c of the cell 11a1 is arranged opposite the first recess 111c of the cell 11a2, and the first recess 111c of the cell 11a1 is in communication with the first recess 111c of the cell 11a2. This can provide more space for the connecting portion 113a of the cell 11a1 and the connecting portion 113a of the cell 11a2, thereby increasing an area of the connecting portions 113a.

In an embodiment, the first recess 111c of the cell 11b1 is arranged opposite the first recess 111c of the cell 11b2, and the first recess 111c of the cell 11b1 is in communication with the first recess 111c of the cell 11b2. This can provide more space for the connecting portion 113a of the cell 11b1 and the connecting portion 113a of the cell 11b2, thereby increasing an area of the connecting portions 113a.

In an embodiment, the first recess 111c of the cell 11a2 and the first recess 111c of the cell 11b1 face away from each other, which is conducive to the connection of the electrode terminal 113.

In an embodiment, the cell housing 111 includes a first side 111e and a second side 111f arranged along the second direction Y. A distance between the first side 111e and the second side 111f along the second direction Y is a width W of the cell 11. The first terminal 113b includes a first edge 1131 and a second edge 1132 arranged along the second direction Y, and a distance between the first edge 1131 and the second edge 1132 along the second direction Y is a width W₁ of the first terminal 113b. Along the second direction Y, a distance between the first edge 1131 and the first side 111e is F₁. The second terminal 113c includes a third edge 1133 and a fourth edge 1134 arranged along the second direction Y, and a distance between the third edge 1133 and the fourth edge 1134 along the second direction Y is a width W₂ of the second terminal 113c. Along the second direction Y, a distance between the fourth edge 1134 and the second side 111f is F₂, where F₁<F₂, F₁+W₁<F₂, and 2*(F₂+W₂)<W.

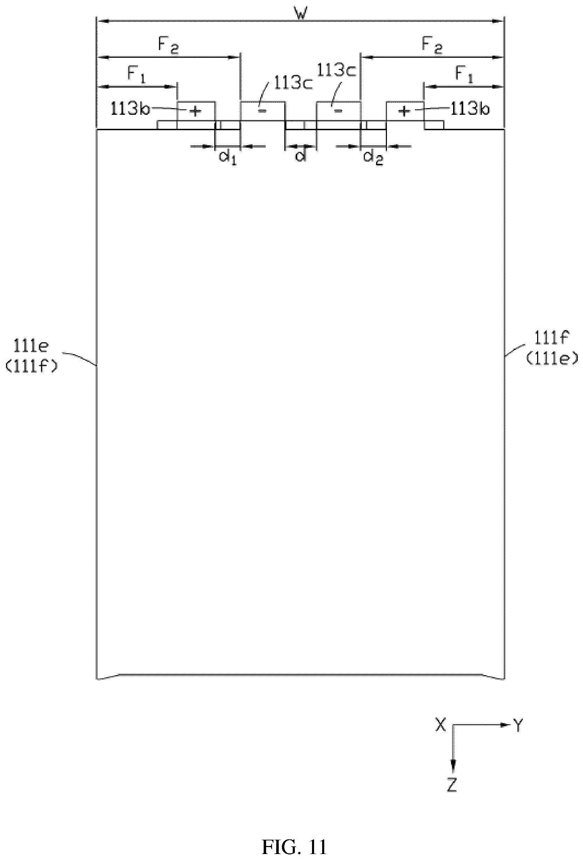

FIG. 11 is a schematic diagram showing two stacked cells 11 with unbent electrode terminals 113. The first group of cells 11a is used as an example for illustration. The electrode terminals 113 of the cell 11a1 and the cell 11a2 are disposed at a same position. When viewed along the first direction X, along the second direction Y, the first terminal 113b of the cell 11a2, the second terminal 113c of the cell 11a1, the second terminal 113c of the cell 11a2, and the first terminal 113b of the cell 11a1 are sequentially separated. Moreover, the two second terminals 113c are located between the two first terminals 113b. A distance between opposite edges of the two second terminals 113c along the second direction Y is defined as d, where d=[W-F₁-F₁-2*(W₁+W₂)]/3. When viewed along the first direction X, along the second direction Y, a distance between opposite edges of the first terminal 113b of the cell 11a2 and the second terminal 113c of the cell 11a1 is d₁, a distance between opposite edges of the first terminal 113b of the cell 11a1 and the second terminal 113c of the cell 11a2 is d₂, where d=d₁=d₂, or d₁ and d₂ are approximately equal to d. This allows the first terminal 113b and the second terminal 113c of adjacent cells 11 to maintain an approximately equal distance in the second direction Y, thereby reducing the occurrence of short circuits and reducing the risk of short circuits under a condition that the thicknesses of the cells 11 are relatively small.

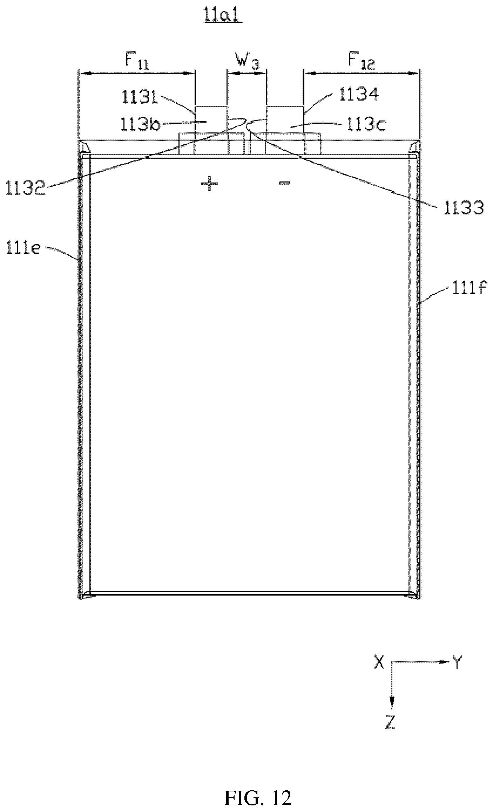

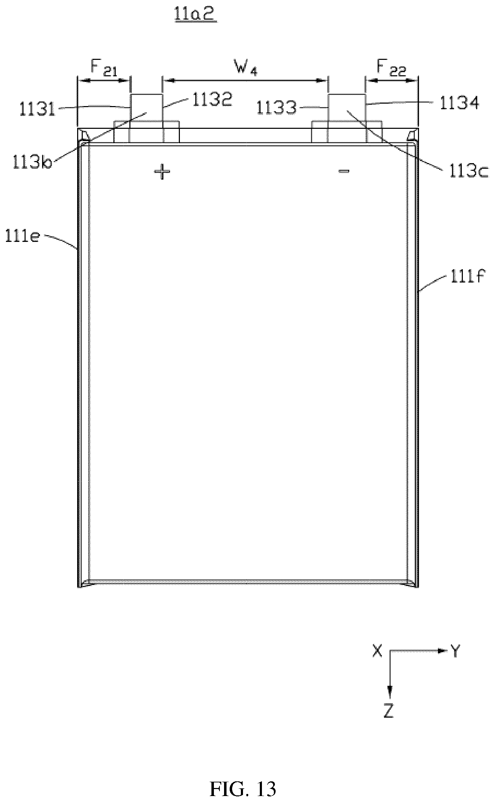

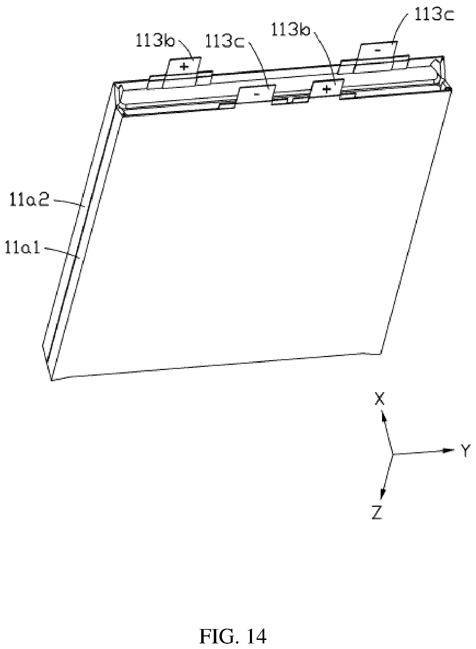

Referring to FIGs. 12 to 15, FIGs 12 to 15 are schematic structural diagrams of unbent electrode terminals 113. The first group of cells 11a is used as an example, and the electrode terminals 113 of the cell 11a1 and the cell 11a2 are disposed at different positions. A distance between the first edge 1131 of the cell 11a1 and the first side 111e along the second direction Y is F₁₁, a distance between the fourth edge 1134 and the second side 111f along the second direction Y is F₁₂, and a distance between the second edge 1132 and the third edge 1133 along the second direction Y is W₃, where F₁₁=F₁₂, W₃<F₁₁, and W₃<F₁₂. A distance between the first edge 1131 of the cell 11a2 and the first side 111e along the second direction Y is F₂₁, a distance between the fourth edge 1134 and the second side 111f along the second direction Y is F₂₂, and a distance between the second edge 1132 and the third edge 1133 along the second direction Y is W₄, where F₂₁=F₂₂, W₄>F₂₁, and W₄>F₂₂. F₁₁>F₂₁, W₁+W₂+W₃<W₄.

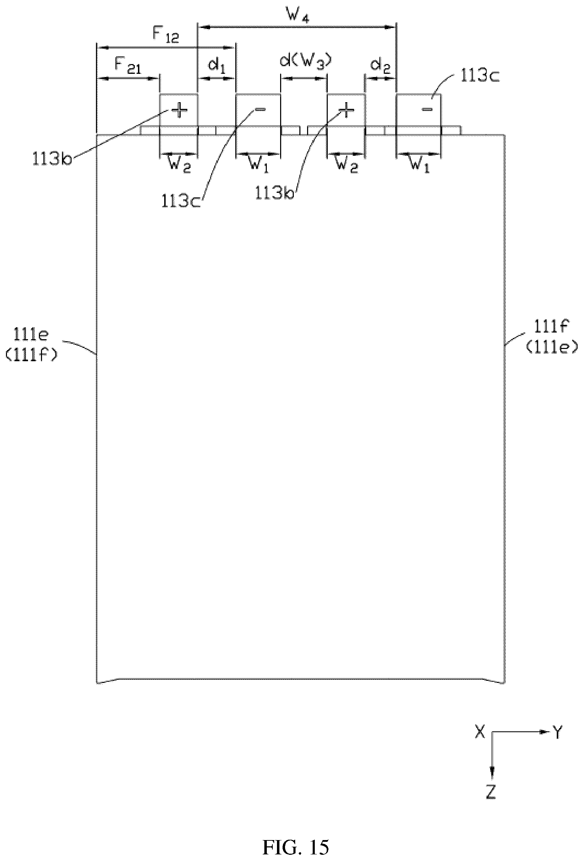

FIG. 15 is a schematic diagram of stacked cells 11 with unbent electrode terminals 113, and the first group of cells 11a is used as an example for illustration. Along the first direction X, a projection of a portion, located outside the cell housing 111, of the first terminal 113b of the cell 11a2, a projection of a portion, located outside the cell housing 111, of the second terminal 113c of the cell 11a1, a projection of a portion, located outside the cell housing 111, of the first terminal 113b of the cell 11al, and a projection of a portion, located outside the cell housing 111, of the second terminal 113c of the cell 11a2 are sequentially separated in the second direction Y. Along the first direction X, a projection of a portion, located outside the cell housing 111, of the first terminal 113b of the cell 11a1 and a projection of a portion, located outside the cell housing 111, of the second terminal 113c are located between a projection of a portion, located outside the cell housing 111, of the first terminal 113b of the cell 11a2 and a projection of a portion, located outside the cell housing 111, of the second terminal 113c; and the first terminal 113b of the cell 11a2 is close to the second terminal 113c of the cell 11a1. Along the second direction Y, a distance d₁ between the first terminal 113b of the cell 11a2 and the second terminal 113c of the cell 11a1 and a distance d₂ between the first terminal 113b of the cell 11a1 and the second terminal 113c of the cell 11a2 are equal to or approximately equal to a distance d(W₃) between the first terminal 113b and the second terminal 113c of the cell 11a1. This allows the first terminal 113b and the second terminal 113c of adjacent cells 11 to maintain an approximately equal distance in the second direction Y, thereby reducing the occurrence of short circuits and reducing the risk of short circuits under a condition that the thicknesses of the cells 11 are relatively small.

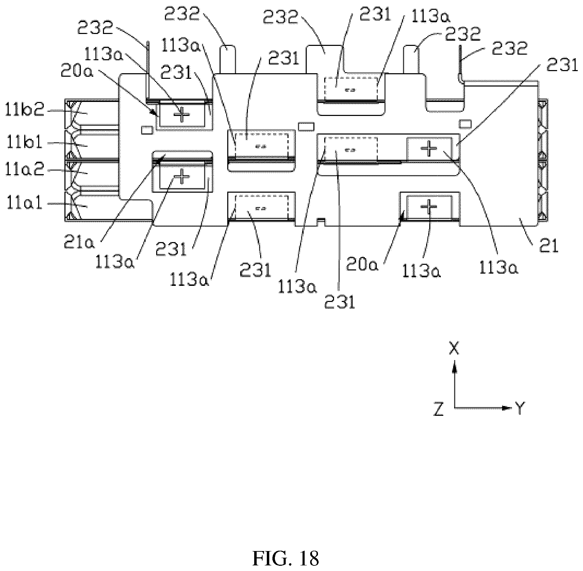

Referring to FIG. 18, in an embodiment, in two adjacent cells 11, along the first direction X, projections of connecting portions 113a of the two adjacent cells 11 are separated in the second direction Y. Along the first direction X, a projection of the connecting portion 113a of the first terminal 113b of the cell 11a2, a projection of the connecting portion 113a of the second terminal 113c of the cell 11a1, a projection of the connecting portion 113a of the second terminal 113c of the cell 11a2, and a projection of the connecting portion 113a of the first terminal 113b of the cell 11a1 are sequentially separated in the second direction Y. Along the first direction X, the projections of the connecting portions 113a of the two second terminals 113c are located between the projections of the connecting portions 113a of the two first terminals 113b, which is conducive to the connection of the cells 11.

In an embodiment, in two adjacent cells 11, along the first direction X, projections of the connecting portions 113a of the two adjacent cells 11 are separated in the second direction Y. Along the first direction X, a projection of the connecting portion 113a of the first terminal 113b of the cell 11b2, a projection of the connecting portion 113a of the second terminal 113c of the cell 11b1, a projection of the connecting portion 113a of the second terminal 113c of the cell 11b2, and a projection of the connecting portion 113a of the first terminal 113b of the cell 11b1 are sequentially separated in the second direction Y. Along the first direction X, the projections of the connecting portions 113a of the two second terminals 113c are located between the projections of the connecting portions 113a of the two first terminals 113b, which is conducive to the connection of the cells 11.

In an embodiment, in two adjacent cells 11, along the first direction X, projections of the connecting portions 113a of two adjacent cells 11 are separated in the second direction Y. Along the first direction X, a projection of the connecting portion 113a of the first terminal 113b of the cell 11a2, a projection of the connecting portion 113a of the second terminal 113c of the cell 11b1, a projection of the connecting portion 113a of the second terminal 113c of the cell 11a2, and a projection of the connecting portion 113a of the first terminal 113b of the cell 11b1 are sequentially separated in the second direction Y. Along the first direction X, the projections of the connecting portions 113a of the two second terminals 113c are located between the projections of the connecting portions 113a of the two first terminals 113b, which is conducive to the connection of the cells 11.

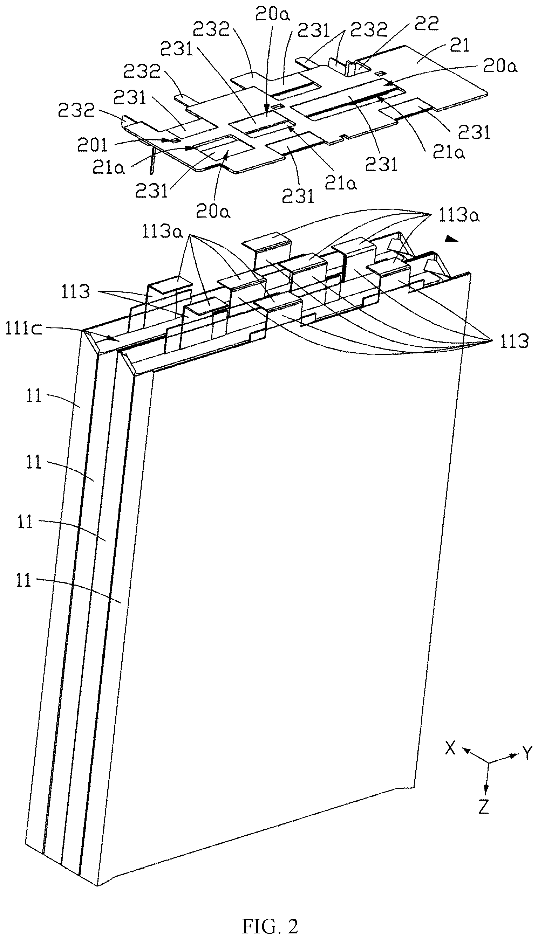

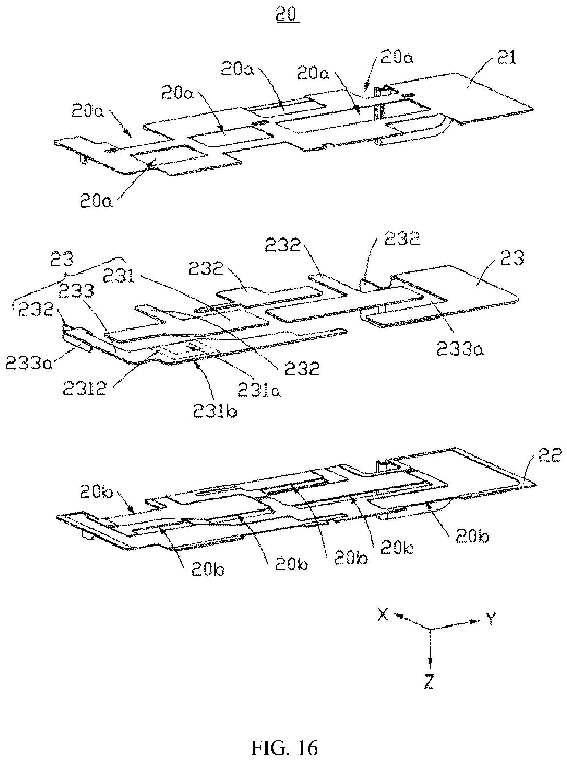

Referring to FIGs. 2 and 16, the connecting member 20 includes a first insulating member 21, a second insulating member 22, and N conductive sheets 23 spaced apart from each other between the first insulating member 21 and the second insulating member 22. Optionally, N=1+M, and M≥3. The first insulating member 21 and the second insulating member 22 are arranged along the third direction Z. A portion of each conductive sheet 23 is exposed through the first insulating member 21 and/or the second insulating member 22; and the electrode terminal 113 is connected to the conductive sheet 23. Optionally, the connecting portion 113a is connected to the conductive sheet 23. In an embodiment, a second terminal 113c of any one of the cells positioned located between the first cell and the M-th cell and a first terminal 113b of an adjacent cell 11 positioned located between the first cell and the M-th cell are both connected to one conductive sheet 23 to implement a series connection. In another embodiment, adjacent cells 11 may be connected in parallel. The electrode terminal 113 may be welded to the conductive sheet 23. Optionally, the electrode terminal 113 may be connected to the conductive sheet 23 by laser welding. Optionally, the electrode terminal 113 may be connected to the conductive sheet 23 by ultrasonic welding. In an embodiment, the conductive sheet 23 includes a first section 231, and the first section 231 is exposed through the first insulating member 21 and/or the second insulating member 22. Along the third direction Z, a projection of the first section 231 overlaps with a projection of the electrode terminal 113. Optionally, along the third direction Z, the projection of the first section 231 overlaps with a projection of the connecting portion 113a, and the first section 231 is at least partially connected to the connecting portion 113a. Optionally, along the third direction Z, the projection of the connecting portion 113a is located within the projection of the first section 231, such that an area of the first section 231 for welding is larger than an area of the connecting portion 113a, which is conducive to welding, and reducing instances where a portion of the connecting portion 113a is not connected to the first section 231.

In an embodiment, In an embodiment, the first insulating member 21 and the second insulating member 22 are flexible, enhancing the toughness and reducing the risk of pulling under vibrational conditions, such as the pulling of the electrode terminal 113, thereby reducing the risk of the electrode terminal 113 detaching from the first section 231.

Referring to FIGs. 1, 2, and 16, in an embodiment, the first section 231 includes a first surface 231a and a second surface 231b arranged along the third direction Z, and the second surface 231b is closer to the cell housing 111 than the first surface 231a. The first insulating member 21 is provided with a first opening 20a, and the second insulating member 22 is provided with a second opening 20b, along the third direction Z, a projection of the first opening 20a overlaps with a projection of the second opening 20b. The number of the first openings 20a is equal to the number of the conductive sheets 23, and the number of the second openings 20b is equal to the number of the conductive sheets 23. Along the third direction Z, at least a portion of a projection of the first section 231 is located within a projection of the first opening 20a, allowing for a first gap 21a between an edge of the first section 231 and an edge of the first opening 20a. The electrode terminal 113 sequentially passes through the second opening 20b and the first gap 21a, and is bent and then connected to the first surface 231a. The connecting portions 113a are all welded to the first surface 231a, which is conducive to checking the welding quality. Optionally, the first terminal 113b includes a conductive aluminum sheet, the second terminal 113c includes a conductive copper sheet, and the first section 231 includes a conductive copper sheet. Optionally, the conductive sheet 23 includes a first extension region 2312. The first extension region 2312 extends outward from the edge of the first section 231, and the first insulating member 21 covers the first extension region 2312 to be connected to the edge of the first opening 20a.

Optionally, along the third direction Z, the projection of the second opening 20b is located within the projection of the first opening 20a, a projection of the first gap 21a overlaps with the projection of the second opening 20b, and the projection of the second opening 20b is separated from the projection of the first section 231. This allows the second insulating member 22 to cover the second surface 231b, with only the first surface 231a exposed, thereby reducing the risk of short circuits. Optionally, an edge of the connecting portion 113a is apart from an edge of the first opening 20a, which is conducive to welding, and reducing interference between the connecting portion 113a and the first insulating member 21.

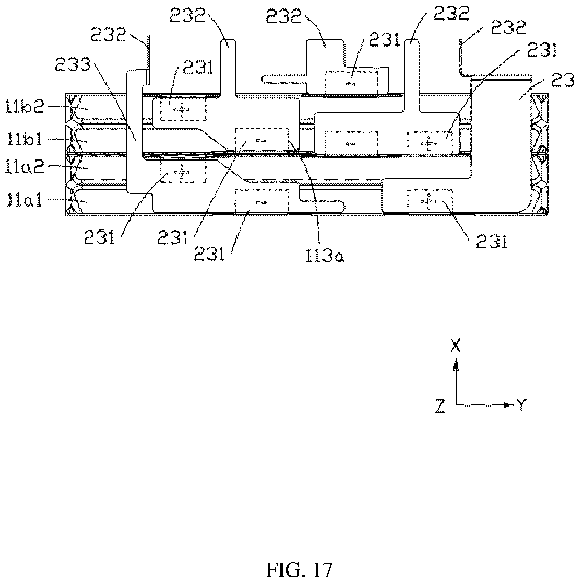

Referring to FIGs. 16 and 17, in an embodiment, the first section 231 includes the first surface 231a and the second surface 231b arranged along the third direction Z, and the first insulating member 21 covers the first surface 231a. The second insulating member 22 is provided with the second opening 20b, and the number of the second openings 20b is equal to the number of the conductive sheets 23. When viewed along a direction opposite to the third direction Z, the projection of the second opening 20b overlaps with the projection of the first section 231, allowing the second surface 231b to be located within the second opening 20b. The connecting portion 113a is connected to the second surface 231b. The connecting portions 113a are all welded to the second surface 231b, which is conducive to enhancing automation efficiency. Optionally, the first terminal 113b includes a conductive aluminum sheet, the second terminal 113c includes a conductive copper sheet, and the first section 231 includes a conductive copper sheet. Optionally, the conductive sheet 23 includes a first extension region 2312. The first extension region 2312 extends outward from the edge of the first section 231, and the second insulating member 22 covers the first extension region 2312 to be connected to the edge of the second opening 20b.

Optionally, the edge of the connecting portion 113a is apart from an edge of the second opening 20b, which is conducive to welding, and reducing interference between the connecting portion 113a and the first insulating member 21.

Optionally, along the third direction Z, a projection of a peripheral edge of the second opening 20b overlaps with the projection of the first section 231, narrowing a gap between the first section 231 and the second opening 20b, eliminating the need for the electrode terminal 113 to pass through the second opening 20b, reducing an area of the second opening 20b, and reducing the risk of short circuits.

Referring to FIGs. 16 and 18, in an embodiment, the first section 231 includes the first surface 231a and the second surface 231b arranged along the third direction Z, the first insulating member 21 is provided with the first opening 20a, and the second insulating member 22 is provided with the second opening 20b. When viewed along the third direction Z, a portion of the first surface 231a of the first section 231 is located within the first opening 20a. When viewed along a direction opposite to the third direction Z, a portion of the second surface 231b of the first section 231 is located within a portion of the second opening 20b, and a portion of the second opening 20b is used for the electrode terminal 113 to pass through. Some electrode terminal 113 pass through the second opening 20b and the first opening 20a and are connected to the first surface 231a, and other electrode terminals 113 are connected to the second surface 231b. Optionally, the first terminal 113b passes through the second opening 20b and the first opening 20a and is connected to the first surface 231a, and the second terminal 113c is connected to the second surface 231b, which is conducive to the production. Optionally, the first terminal 113b includes a conductive aluminum sheet, the second terminal 113c includes a conductive copper sheet, and the first section 231 includes a conductive copper sheet. The first terminal 113b is disposed on the first surface 231a, which is conducive to checking the welding quality and specific welding conditions.

In an embodiment, the welding includes laser welding, ultrasonic welding, and other methods. In another embodiment, the connecting portion 113a and the first section 231 may alternatively be connected through another manner such as a conductive adhesive.

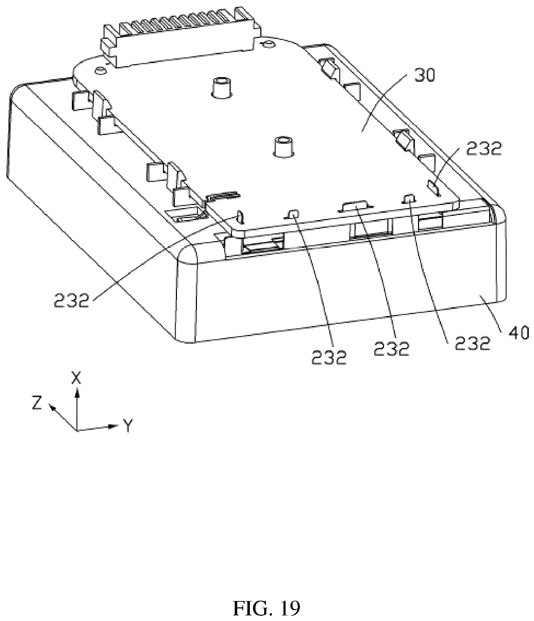

Referring to FIGs. 1, 16, and 19, in an embodiment, the conductive sheet 23 further includes a second section 232, and the second section 232 extends out from the first insulating member 21 and the second insulating member 22 to be connected to other conductive members. A plurality of second sections 232 are spaced apart along the second direction Y, which is conducive to the welding of the second sections 232 to other conductive members, and reducing damage to the cell 11 during a welding process. Optionally, the second section 232 is connected to a circuit board 30, implementing a connection between the cell 11 and the circuit board 30, thereby implementing voltage collection, reducing sampling terminals and voltage collection harnesses used, and lowering the quantity of materials. Optionally, the circuit board 30 includes a BMS component (Battery Management System). Specifically, the BMS component includes a plurality of electronic components, and the plurality of electronic components can perform functions such as data collection, control, protection, communication, electric quantity calculation, signal transmission, and electrical energy transmission for a battery. Optionally, the circuit board 30 includes a flexible printed circuit (FPC, Flexible Printed Circuit). Optionally, the circuit board 30 includes a printed circuit board (PCB, Printed Circuit Board), and a plurality of wires (not shown) are disposed on the circuit board 30. Optionally, the second section 232 is welded to the circuit board 30.

In an embodiment, the conductive sheet 23 further includes a third section 233, and the third section 233 is connected to the first section 231 and the second section 232. The first insulating member 21 and the second insulating member 22 cover the third section 233 to provide insulation for the third section 233, reducing the materials, and facilitating determination of positions of a plurality of conductive sheets 23, thereby reducing the risk of short circuits caused by contact between the plurality of conductive sheets 23.

Referring to FIGs. 1 and 16, in an embodiment, at least a portion of the third section 233 is bent to further increase a distance between adjacent second sections 232, further reducing the risk of short circuits caused by contact between the adjacent second sections 232. In addition, this is further conducive to the welding of the second sections 232 and the circuit board 30, further reducing damage to the cell 11 during the welding process.

In an embodiment, the third sections 233 of at least some of the conductive sheets 23 each include a third subsection 233a; the third subsection 233a is bent along the second direction Y towards the second insulating member 22; and the second section 232 is connected to the third subsection 233a.

Referring to FIGs. 1 and 2, during manufacturing of the foregoing connecting member 20, a sheet is first subjected to continuous stamping by a stamping device to form a plurality of conductive sheets 23. After formation of the plurality of conductive sheets 23, the sheet is provided with a first connecting strip (not shown) and a second connecting strip (not shown), where the first connecting strip and the second connecting strip remain continuous along a length direction of the sheet. The plurality of formed conductive sheets 23 are connected to the first connecting strip and the second connecting strip, allowing the plurality of formed conductive sheets 23 to be located between the first connecting strip and the second connecting strip. Subsequently, the first insulating member 21 and the second insulating member 22 respectively cover the plurality of conductive sheets 23 along the third direction Z to cut the first connecting strip and the second connecting strip of the sheet, allowing the plurality of conductive sheets 23 to be separated from each other, and allowing the plurality of conductive sheets 23 to be spaced apart. In an embodiment, after the first connecting strip and the second connecting strip of the sheet are cut, some of the conductive sheets 23 still remain interconnected. Connecting portions of two conductive sheets 23 and the first insulating member 21 and the second insulating member 22 covering the connecting portions are stamped, so that the interconnected conductive sheets 23 are separated, and a through hole 201 is formed in the connecting member 20.

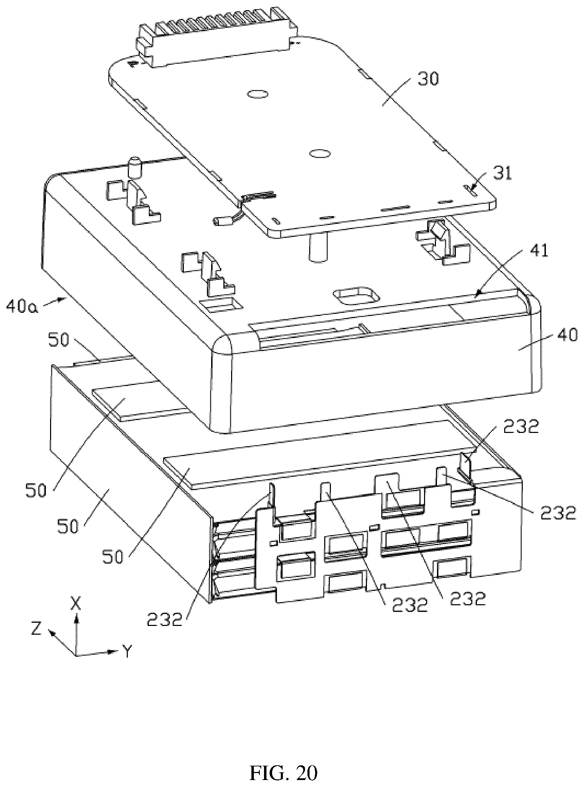

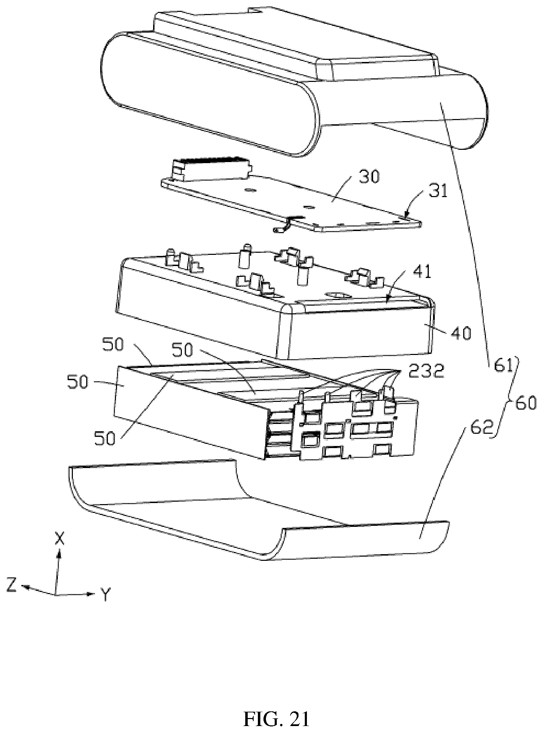

Referring to FIGs. 20 and 21, in an embodiment, the battery pack 100 further includes a bracket 40, and the cell assembly 10 and the circuit board 30 are disposed on two opposite sides of the bracket 40 along the first direction X. The bracket 40 is provided with a first through hole 41. Along the first direction X, a projection of the second section 232 is located within a projection of the first through hole 41. The circuit board 30 is provided with a plurality of second through holes 31. The second section 232 passes through the first through hole 41 and is disposed in the second through hole 31. The second section 232 is fixedly connected to the circuit board 30 through welding or conductive adhesive.

In an embodiment, the bracket 40 is provided with a first space 40a, and the cell assembly 10 is disposed within the first space 40a. Optionally, an insulating buffer member 50 is provided between the cell assembly 10 and an inner wall of the first space 40a and is configured to fix the position of the cell assembly 10 and buffer the cell assembly 10. Optionally, the buffer member 50 includes foam.

In an embodiment, the battery pack 100 further includes a housing 60, where the housing 60 includes a first casing 61 and a second casing 62; and the first casing 61 is connected to the second casing 62 to accommodate the cell assembly 10, the connecting member 20, the circuit board 30, and the bracket 40 within the first casing 61 and the second casing 62.

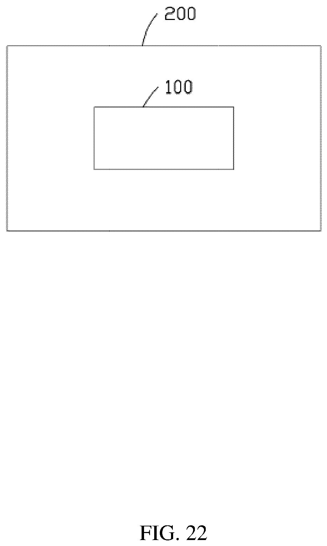

Referring to FIG. 22, this application further provides an electric device 200 using the foregoing battery pack 100. In an embodiment, the electric device 200 in this application may be, but is not limited to, a drone, a cleaning tool, a backup power source, an electric automobile, an electric motorcycle, an electric motor bicycle, an electric tool, or a large household battery.

Those of ordinary skill in the art should appreciate that some foregoing embodiments are for description of this application only but not for limiting this application. Appropriate modifications and variations made to the foregoing embodiments without departing from the essential spirit and scope of this application all fall within the scope of this application.

## Claims

1. A battery pack, comprising:
a cell assembly comprising M cells stacked along a first direction; each cells comprises a cell housing, an electrode terminal, and an electrode assembly disposed in the cell housing; the electrode terminal is connected to the electrode assembly and extends out from the cell housing;a projection of a portion, located outside the cell housing, of an electrode terminal of the each cells along the first directionis spaced apart from a projection of a portion, located outside the cell housing, of an electrode terminal of an adjacent cell along the first directionin a second direction, and the second direction is perpendicular to the first direction; and
a connecting member comprising N conductive sheets spaced apart,from each other the electrode terminals is connected to the conductive sheet.

2. The battery pack according to claim 1, wherein the electrode terminal comprises a first terminal and a second terminal with opposite polarities; the second terminal and the first terminal are arranged along the second direction; a second terminal of the each cells positioned between the first cell and the M-th cell and a first terminal of an adjacent cell positioned between the first cell (11a1) and the M-th cellare connected to one conductive sheet .

3. The battery pack according to claim 2, wherein a portion of the electrode terminal located outside the cell housing comprises a connecting portion, N=1+M, and M≥3.

4. The battery pack according to any one of claims 1 to 3, wherein the connecting member comprises a first insulating member and a second insulating member; a plurality of conductive sheets spaced apart are located between the first insulating member and the second insulating member; and a portion of each conductive sheet is exposed through the first insulating member and/or the second insulating member.

5. The battery pack according to claim 4, wherein the conductive sheet comprises a first section; the first section comprises a first surface and a second surface arranged along a third direction; the second surface facing the cell housing; the electrode terminal is connected to the first surface and/or the second surface; and the third direction is perpendicular to both the first direction and the second direction.

6. The battery pack according to claim 5, wherein the first insulating member and the second insulating member are arranged along the third direction; the first insulating member and/or the second insulating member is provided with an opening; along the third direction, a projection of the first section overlaps with a projection of the opening; and the electrode terminal is connected to the first section.

7. The battery pack according to claim 6, wherein the first insulating member is provided with a first opening; the second insulating member is provided with a second opening; along the first direction, a first gap is provided between an edge of the first section and an edge of the first opening; and the electrode terminal extends out from the first gap through the second opening and is connected to the first surface.

8. The battery pack according to claim 7, wherein along the third direction, a projection of the first gap overlaps with a projection of the second opening.

9. The battery pack according to claim 6, wherein the second insulating member is provided with a second opening; along the third direction, a projection of the second opening overlaps with the projection of the first section; and the electrode terminal is connected to the second surface.

10. The battery pack according to claim 6, wherein the first insulating member is provided with a first opening; the second insulating member is provided with a second opening; some electrode terminals pass through the second opening and are connected to the first surface; along the third direction, a projection of the second opening overlaps with the projection of the first section; and other electrode terminals are connected to the second surface.

11. The battery pack according to claim 6, wherein the conductive sheet further comprises a second section; the second section extends out from the first insulating member and the second insulating member; and a plurality of second sections are spaced apart.

12. The battery pack according to claim 11, wherein the conductive sheet further comprises a third section; the third section is disposed between the first insulating member and the second insulating member; and the third section is connected to the first section and the second section.

13. The battery pack according to claim 7, wherein an edge of the electrode terminal is apart from the edge of the first opening.

14. The battery pack according to claim 4, wherein the cell housing comprises a first portion and a second portion; the electrode terminal extends out from the second portion; the second portion is connected to the first portion to form a first recess; and along the first direction, a thickness of the first portion is less than 6 mm.

15. The battery pack according to claim 14, wherein along the first direction, the thickness of the first portion is 2 mm-4 mm.

16. The battery pack according to claim 11, further comprising a circuit board, wherein the second section is connected to the circuit board.

17. The battery pack according to claim 2, wherein the electrode terminals of adjacent cells are located at different positions of the cell housing; along the second direction, a width of the first terminal is W₁, and a width of the second terminal is W₂; along the second direction, a distance between opposite edges of the first terminal and the second terminal of one cell is W₃, and a distance between opposite edges of the first terminal and the second terminal of another adjacent cell is W₄, and W₁+W₂+W₃<W₄.

18. The battery pack according to claim 2, wherein the electrode terminals of the cells are all disposed at a same position of the cell housing; the cell housing comprises a first side and a second side arranged along the second direction; along the second direction, a distance between the first side and the second side is W, a distance between an edge of the first terminal close to the first side and the first side is F₁, a distance between an edge of the second terminal close to the second side and the second side is F₂, a width of the first terminal is W₁, and a width of the second terminal is W₂, and F₁+W₁<F₂ and 2*(F₂+W₂)<W.

19. The battery pack according to claim 18, wherein along the second direction, a distance between the second terminals of adjacent cells is d, and d=[W-F₁-F₁-2*(W₁+W₂)]/3.

20. An electric device, comprising the battery pack according to any one of claims 1 to 19.
